# EUROPÄISCHE PATENTSCHRIFT

(11) **EP 3 554 919 B1**
(45) Veröffentlichungstag und Bekanntmachung des Hinweises auf die Patenterteilung: **21.10.2020**
(21) Anmeldenummer: 17807822.6
(22) Anmeldetag: 27.11.2017
(51) Int. Cl.: B61K 9/08, E01B 35/00

(54) **GLEISMESSFAHRZEUG UND VERFAHREN ZUM ERFASSEN EINER GLEISGEOMETRIE**
TRACK-MEASURING VEHICLE AND METHOD FOR RECORDING TRACK GEOMETRY
VÉHICULE D'AUSCULTATION DE VOIE ET PROCÉDÉ POUR ACQUÉRIR UNE GÉOMÉTRIE DE VOIE

(30) Priorität: 19.12.2016 AT 5732016
(43) Veröffentlichungstag der Anmeldung: 23.10.2019
(73) Patentinhaber: Plasser & Theurer Export von Bahnbaumaschinen GmbH, 1010 Wien (AT)
(72) Erfinder: KAISER, Christoph, 4170 St. Stefan am Walde (AT); KAISER, Robert, 4170 Haslach an der Mühl (AT)
(86) Internationale Anmeldenummer: PCT/EP2017/080505
(87) Internationale Veröffentlichungsnummer: WO 2018/114233

(56) Entgegenhaltungen:
- WO-A1-2008/122319
- US-A1- 2004 122 569

## Beschreibung

### Gebiet der Technik

Die Erfindung betrifft ein Gleismessfahrzeug zum Erfassen einer Gleisgeometrie eines Gleises, mit einem auf zwei Schienen eines Gleises verfahrbaren und Schienenfahrwerke aufweisenden Fahrzeugrahmen, und mit einer ersten Messbasis, auf der eine Inertialmesseinheit und für eine Positionsbestimmung gegenüber jeder Schiene mindestens eine berührungslose Lagemesseinrichtung angeordnet sind. Zudem betrifft die Erfindung ein Verfahren zum Betreiben eines solchen Gleismessfahrzeugs.

### Stand der Technik

Für eine Instandhaltung des Gleisoberbaus sind regelmäßige Kontrollen erforderlich. Dazu wird in regelmäßigen Abständen das Gleis mit einer Gleismessvorrichtung in Form eines Gleismessfahrzeuges befahren, welches die Gleisgeometrie erfasst, um diese im Anschluss zu bewerten. Da sich die Gleisgeometrie direkt auf die Fahrdynamik eines auf Schienen fahrenden Fahrzeugs auswirkt, ist eine präzise Messung entscheidend für die Bewertung der Bahnsicherheit. Gleismessfahrzeuge sind daher bereits seit Langem bekannt.

Häufig werden Messsysteme mit mechanischen Sensoren verwendet, die mit beweglichen Punktfühlern ständig in Kontakt mit dem Gleis sind. Aus der Bewegung der Sensoren lässt sich in weiterer Folge die Gleisgeometrie ableiten. Eine solche Vorrichtung ist beispielsweise aus der DE 39 14 830 A1 bekannt.

Bei neueren optischen und inertialen Messsystemen werden kontaktlose Lasersensoren verwendet, um die gewünschten Gleisgeometriemessdaten abzuleiten. Die vertikale Gleislage wird aus einer Differenz zweier Abstandsmessgrößen berechnet, die sich auf ein Koordinatensystem beziehen. Dadurch werden auch die Geschwindigkeitsbeschränkungen mechanischer Messsysteme überwunden.

Durch Schnee- oder Sandverwehungen auf dem Gleis stoßen aber die optischen Messsysteme an ihre Grenzen und können die Gleisgeometrie daher auch nicht mehr korrekt erfassen. Aus der DE 41 36 904 A1 ist beispielsweise eine Einrichtung zur berührungslosen Abstandsmessung von Schienen eines Gleises bekannt. Ein Inertialmesssystem ist in der Fachzeitschrift Eisenbahningenieur (52) 9/2001 auf den Seiten 6-9 beschrieben.

Aus der WO 2008/122319 A1 ist ein Gleismessfahrzeug gemäß dem Oberbegriff des Anspruchs 1 sowie ein entsprechendes Verfahren zum Betreiben des bekannten Gleismessfahrzeugs gemäß dem Oberbegriff des Anspruchs 14 bekannt geworden.

### Zusammenfassung der Erfindung

Der Erfindung liegt die Aufgabe zugrunde, für ein Gleismessfahrzeug der eingangs genannten Art eine Verbesserung gegenüber dem Stand der Technik anzugeben. Eine weitere Aufgabe besteht darin, ein Verfahren zum Betreiben eines verbesserten Gleismessfahrzeuges darzulegen.

Erfindungsgemäß werden diese Aufgaben gelöst durch ein Gleismessfahrzeug gemäß Anspruch 1 und ein Verfahren gemäß Anspruch 14. Abhängige Ansprüche geben vorteilhafte Ausgestaltungen der Erfindung an.

Die Erfindung sieht vor, dass eine absenkbare zweite Messbasis angeordnet ist, welche auf die Schienen aufsetzbare Messlaufräder umfasst und über Kompensationsmesseinrichtungen mit der ersten Messbasis verbunden ist. Somit kann, sobald die berührungslosen Lagemesseinrichtungen beispielsweise durch starken Regen, Schnee- oder Sandverwehungen an ihre Grenzen stoßen, die Gleismessung mittels der absenkbaren mechanischen zweiten Messbasis lückenlos fortgesetzt werden. Die Kompensationsmesseinrichtungen erfassen dabei laufend eine Lageänderung der zweiten Messbasis gegenüber der Inertialmesseinheit. Damit ist aus den Messdaten der Inertialmesseinheit in einfacher Weise die Gleisgeometrie ableitbar.

In einer vorteilhaften Ausprägung der Erfindung ist vorgesehen, dass auf der ersten Messbasis für die Positionsbestimmung gegenüber der jeweiligen Schiene zwei voneinander distanzierte Lagemesseinrichtungen angeordnet sind. Dadurch ist keine Mindestgeschwindigkeit des Gleismessfahrzeuges wie bei einer Einpunktmessung pro Schiene nötig. Eine Steigung oder ein Gefälle und somit die Längshöhe der jeweiligen Schiene ist auch im Stillstand des Fahrzeugs oder beim Anfahren messbar.

In einer vorteilhaften Weiterbildung sind die Lagemesseinrichtungen als Laser-Linienscanner ausgebildet. Der Vorteil liegt hier in einer sehr geringen Reaktionszeit und Messfrequenz des Laser-Linienscanners.

Eine weitere vorteilhafte Ausbildung ist, dass die Kompensationsmesseinrichtungen als Weg- und/oder Winkelmesseinrichtungen ausgebildet sind. Damit ist die Relativbewegung zwischen der ersten und der zweiten Messbasis genau erfassbar.

Eine weitere Verbesserung der erfindungsgemäßen Vorrichtung sieht vor, dass die erste Messbasis als Fahrwerksrahmen eines Schienenfahrwerks ausgebildet ist. Dadurch entfällt die Notwendigkeit eines zusätzlichen Messrahmens.

In einer vorteilhaften Weiterbildung umfasst die zweite Messbasis eine erste Teleskopachse mit zwei Messlaufrädern, welche absenkbar am Fahrwerksrahmen gelagert ist. Die zweite Messbasis wird bei Bedarf auf das Gleis abgesenkt, wobei mittels der Teleskopachse eine Anpassung an die Spurweite des Gleises erfolgt.

In einer vorteilhaften Ausprägung der Erfindung ist vorgesehen, dass die zweite Messbasis eine zweite Teleskopachse mit zwei Messlaufrädern umfasst, welche gegenüber der ersten Teleskopachse um eine Gleisfahrzeuglängsachse drehbar gelagert ist. Dadurch kann die Relativbewegung gegenüber der ersten Teleskopachse gemessen werden, wie sie beispielsweise bei Gleisüberhöhungen auftritt. Ein weiterer Vorteil ist hier wiederum, dass hierzu keine Mindestgeschwindigkeit des Gleismessfahrzeuges notwendig ist.

Des Weiteren ist es sinnvoll, wenn der jeweiligen Teleskopachse ein pneumatischer Antrieb zum seitlichen Anpressen der Messlaufräder an die Schienen zugeordnet ist. Dadurch werden eine präzise Verfolgung des Schienenverlaufs und ein perfektes Messergebnis erzielt.

Eine einfache Ausprägung der Erfindung sieht vor, dass die zweite Messbasis über pneumatische Antriebe mit dem Fahrwerksrahmen verbunden ist. Der jeweilige pneumatische Antrieb erlaubt ein leistungsloses Halten bei konstanter Kraft, wodurch die zweite Messbasis permanent an die Schienen gedrückt wird.

Eine weitere vorteilhafte Ausbildung der Erfindung ist dadurch gegeben, dass das Gleismessfahrzeug eine Auswerteeinrichtung umfasst, welche zur Auswertung der Messergebnisse der Intertialmesseinheit, der Lagemesseinrichtungen und der Kompensationsmesseinrichtungen eingerichtet ist. Diese zentrale Auswerteeinrichtung verarbeitet somit die Daten der optischen und auch der mechanischen Messungen.

Für eine räumliche Positionserfassung ist es sinnvoll, wenn das Gleismessfahrzeug eine GNNS-Antenne zum Empfang von Signalen eines globalen Navigationssatellitensystems umfasst. Dadurch kann eine einfache räumliche Zuordnung der Messergebnisse erzielt werden.

Eine weitere Verbesserung der Erfindung sieht vor, dass die zweite Messbasis in einer angehobenen Stellung durch eine Sicherheitseinrichtung arretierbar ist. Dadurch kann bei Verwendung der berührungslosen Lagemesseinrichtungen die zweite Messbasis in einer angehobenen Ruhestellung entsprechend gesichert werden.

Vorzugsweise ist die Sicherheitseinrichtung als Sicherungshaken ausgeführt, wodurch eine konstruktiv einfache, aber dennoch effektive Lösung vorliegt.

Das erfindungsgemäße Verfahren sieht vor, dass während einer Fahrt des Gleismessfahrzeugs mittels der Inertialmesseinheit eine Raumkurve erfasst wird, dass in einem ersten Betriebsmodus die Raumkurve mittels Messdaten der Lagemesseinrichtungen in eine dem Gleisverlauf entsprechende Raumkurve transformiert wird und dass in einem zweiten Betriebsmodus bei abgesenkter zweiter Messbasis die Raumkurve mittels Messdaten der Kompensationsmesseinrichtungen in eine dem Gleisverlauf entsprechende Raumkurve transformiert wird. Vorteilhaft ist hierbei, dass in beiden Betriebsmodi eine gemeinsame Inertialmesseinheit zur Erfassung der Raumkurve genutzt wird.

In einer weiterführenden Ausprägung des Verfahrens ist vorgesehen, dass zwischen erstem und zweiten Betriebsmodus in Abhängigkeit eines Messsignals automatisch umgeschaltet wird. Sollte es durch erschwerte Bedingungen den Lagemesseinrichtungen nicht möglich sein ein genaues Messergebnis zu erfassen, wird automatisch in den zweiten Betriebsmodus umgeschaltet. Dies gilt auch in umgekehrter Reihenfolge falls es die Bedingungen auf dem Gleis wieder erlauben optisch zu messen, wird automatisch vom zweiten in den ersten Betriebsmodus umgeschaltet.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: ein Gleismessfahrzeug samt Drehgestell,
- Fig. 2: eine 3D-Ansicht der ersten und zweiten Messbasis und
- Fig. 3: eine Ansicht von unten auf das Drehgestell.

### Beschreibung der Ausführungsformen

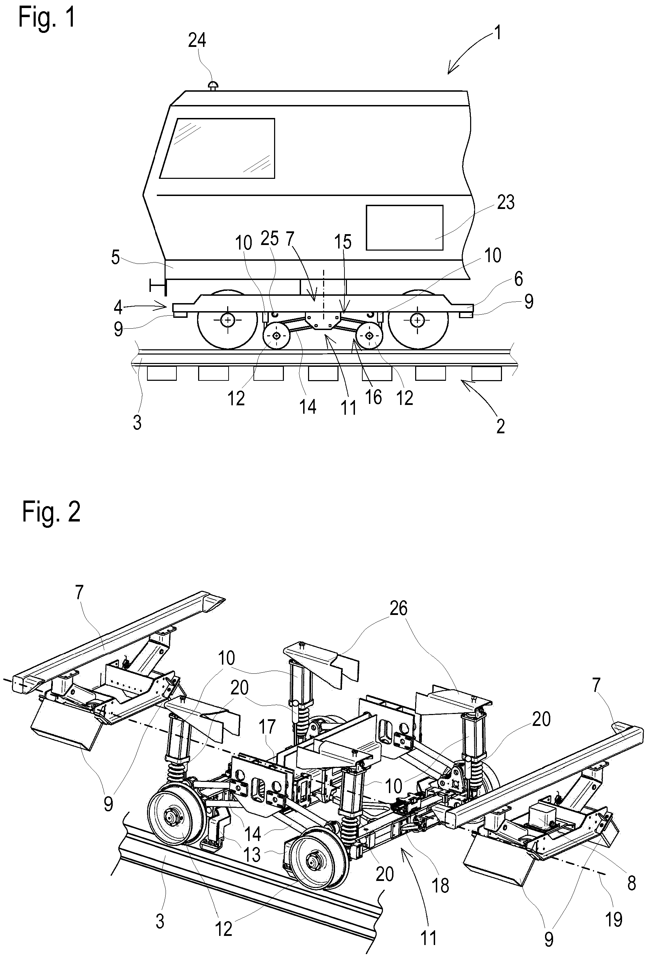

Ein in Fig. 1 vereinfacht dargestelltes Gleismessfahrzeug 1 zum Erfassen einer Gleisgeometrie eines Gleises 2 mit auf Schienen 3 verfahrbaren Schienenfahrwerken 4 und einem darauf abgestützten Fahrzeugrahmen 5 weist eine als Fahrwerksrahmen 6 ausgebildete erste Messbasis 7 samt Inertialmesseinheit 8 und Lagemesseinrichtungen 9 und eine über erste pneumatische Antriebe 10 absenkbare zweite Messbasis 11 auf.

Die zweite Messbasis 11 umfasst auf die Schienen 3 aufsetzbare Messlaufräder 12 und ist über Koppelstangen 14 mit der ersten Messbasis 7 verbunden. Die Koppelstangen 14 sind an ihrem oberen Ende 15 drehbar auf der ersten Messbasis 7 gelagert und an ihrem unteren Ende 16 jeweils mit einer ersten Teleskopachse 17 und mit einer zweiten Teleskopachse 18 verbunden. Die erste Teleskopachse 17 ist gegenüber der zweiten Teleskopachse 18 um eine Gleisfahrzeuglängsachse 19 verdrehbar gelagert (Fig. 2).

Auf dem Fahrwerksrahmen 6 können Konsolen 26 angeordnet sein, an denen sich die ersten pneumatischen Antriebe 10 abstützen. Somit ist es möglich, auf bereits bestehende Schienenfahrwerke 4 Konsolen 26 und den Rahmen der ersten Messbasis 7 nachzurüsten.

Eine GNNS-Antenne 24 zum Empfang von Signalen eines globalen Navigationssatellitensystems und eine Auswerteeinrichtung 23 sind an dem Gleismessfahrzeug 1 angeordnet. In einer angehobenen Position wird die zweite Messbasis 11 durch Sicherheitseinrichtungen 25 arretiert, die vorzugsweise als Sicherungshaken ausgeführt sind.

Fig. 2 zeigt einen Teil der ersten Messbasis 7 und die zweite Messbasis 11 im abgesenkten Zustand. Endseitig des Schienenfahrwerks 4 sind an einer Unterseite der ersten Messbasis 7 Lagemesseinrichtungen 9 befestigt. Diese sind vorzugsweise als Laser-Linienscanner ausgebildet, wobei jeweils zwei Laser-Linienscanner gegen eine Innenkante einer Schiene 3 gerichtet sind.

An der ersten Messbasis 7 ist die Inertialmesseinheit 8 vorzugsweise mittig zwischen zwei Lagemesseinrichtungen 9 angeordnet, um eine Raumkurve in Gleismitte zu erfassen. Somit bildet die erste Messbasis 7 mit dem Fahrwerksrahmen 6, den Lagemesseinrichtungen 9 und der Intertialmesseinheit 8 eine starre Vorrichtung. Im ersten Betriebsmodus wird die Lage der ersten Messbasis 7 gegenüber den Schienen laufend mittels der Lagemesseinrichtungen 9 erfasst.

Im zweiten Betriebsmodus ist die zweite Messbasis 11 mittels der ersten pneumatischen Antriebe 10 auf das Gleis 2 abgesenkt. An den ersten pneumatischen Antrieben 10 ist als Kompensationsmesseinrichtungen jeweils eine erste Wegmesseinrichtung 20 angeordnet. Damit wird eine vertikale Relativbewegung zwischen der ersten Messbasis 7 und der zweiten Messbasis 11 erfasst. Alternativ kann auch eine Winkelmesseinrichtung an den Koppelstangen 14 zur Erfassung der Relativbewegung angebracht sein.

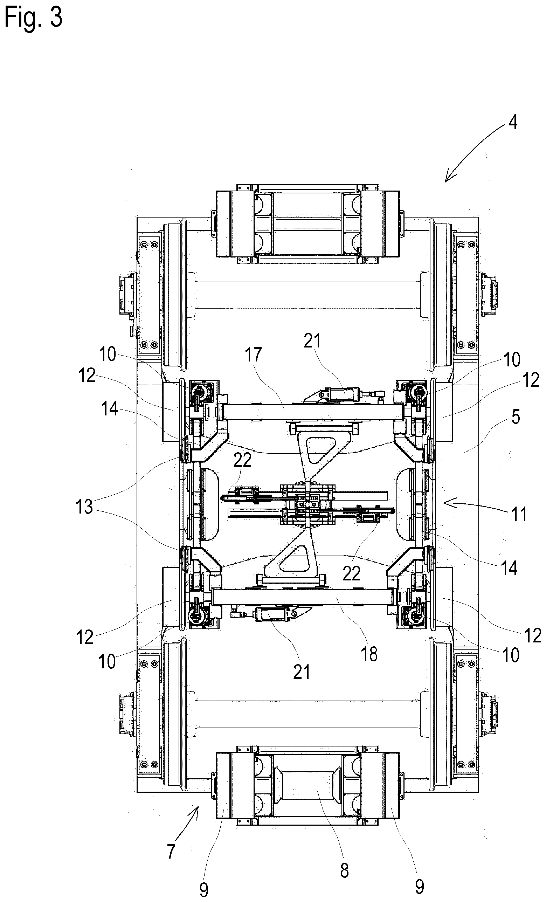

Fig. 3 zeigt eine Ansicht von unten auf das Schienenfahrwerk 4. Auf den Teleskopachsen 17, 18 ist jeweils ein zweiter pneumatischer Antrieb 21 zum seitlichen Anpressen der Messlaufräder 12 an die Schienen 3 angeordnet. Um zu verhindern, dass beim Überfahren einer Weiche oder Kreuzung ein Messlaufrad 12 ein eine Schienenlücke gedrückt wird, ist jedem Messlaufrad 12 ein Führungsschwert 13 zugeordnet. Sobald dieses an einem Radlenker geführt wird, hält es das zugeordnete Messlaufrad 12 zurück und wirkt so dem Anpressdruck entgegen.

Mittig zwischen den Teleskopmessachsen 17, 18 sind als Kompensationsmesseinrichtungen zweite Wegmesseinrichtungen 22 angeordnet, die eine seitliche Verschiebung der zweiten Messbasis 11 gegenüber der ersten Messbasis 7 erfassen. Auf diese Weise wird im zweiten Betriebsmodus die Lage der ersten Messbasis 7 gegenüber den Schienen 3 mittels der mechanischen Kompensationsmesseinrichtungen 20, 22 erfasst.

In einer nicht dargestellten Variante ist die erste Messbasis 7 vom Schienenfahrwerk 4 entkoppelt als Rahmen an den Radachsen der Schienenräder angebracht. Dadurch ist ein direkter Messvorgang des vertikalen Schienenverlaufs möglich und es muss lediglich eine seitliche Relativbewegung der ersten Messbasis 7 gegenüber den Schienen 3 erfasst werden.

Der Auswerteeinrichtung 23 sind die Messsignale der Inertialmesseinheit 8, der berührungslosen Lagemesseinrichtungen 9 und der Kompensationsmesseinrichtungen 20, 22 zugeführt. Dabei wird vorteilhafterweise laufend eine Plausibilitätsprüfung der Signale der Lagemesseinrichtungen 9 vorgenommen. Sobald Signalsprünge oder Signalausfälle erkannt werden, wird die zweite Messbasis 11 abgesenkt und vom ersten in den zweiten Betriebsmodus umgeschaltet.

## Patentansprüche

1. Gleismessfahrzeug (1) zum Erfassen einer Gleisgeometrie eines Gleises (2), mit einem auf zwei Schienen (3) des Gleises (2) verfahrbaren und Schienenfahrwerke (4) aufweisenden Fahrzeugrahmen (5), und mit einer ersten Messbasis (7), auf der eine Inertialmesseinheit (8) und für eine Positionsbestimmung gegenüber jeder Schiene (3) mindestens eine berührungslose Lagemesseinrichtung (9) angeordnet sind, **dadurch gekennzeichnet, dass** eine absenkbare zweite Messbasis (11) angeordnet ist, welche auf die Schienen (3) aufsetzbare Messlaufräder (12) umfasst und über Kompensationsmesseinrichtungen (20, 22) mit der ersten Messbasis (7) verbunden ist.

2. Gleismessfahrzeug (1) nach Anspruch 1, **dadurch gekennzeichnet, dass** auf der ersten Messbasis (7) für die Positionsbestimmung gegenüber der jeweiligen Schiene (3) zwei voneinander distanzierte Lagemesseinrichtungen (9) angeordnet sind.

3. Gleismessfahrzeug (1) nach Anspruch1 oder 2, **dadurch gekennzeichnet, dass** die Lagemesseinrichtungen (9) als Laser-Linienscanner ausgebildet sind.

4. Gleismessfahrzeug (1) nach einem der Ansprüche 1 bis 3, **dadurch gekennzeichnet, dass** die Kompensationsmesseinrichtungen (20, 22) als Weg- und/oder Winkelmesseinrichtungen ausgebildet sind.

5. Gleismessfahrzeug (1) nach einem der Ansprüche 1 bis 4, **dadurch gekennzeichnet, dass** die erste Messbasis (7) als Fahrwerksrahmen (6) eines Schienenfahrwerks (4) ausgebildet ist.

6. Gleismessfahrzeug (1) nach Anspruch 5, **dadurch gekennzeichnet, dass** die zweite Messbasis (11) eine erste Teleskopachse (17) mit zwei Messlaufrädern (12) umfasst, welche absenkbar am Fahrwerksrahmen (6) gelagert ist.

7. Gleismessfahrzeug (1) nach Anspruch 6, **dadurch gekennzeichnet, dass** die zweite Messbasis (11) eine zweite Teleskopachse (18) mit zwei Messlaufrädern (12) umfasst, welche gegenüber der ersten Teleskopachse (17) um eine Gleisfahrzeuglängsachse (19) drehbar gelagert ist.

8. Gleismessfahrzeug (1) nach Anspruch 6 oder 7, **dadurch gekennzeichnet, dass** der jeweiligen Teleskopachse (17,18) ein zweiter pneumatischer Antrieb (21) zum seitlichen Anpressen der Messlaufräder (12) an die Schienen (3) zugeordnet ist.

9. Gleismessfahrzeug (1) nach einem der Ansprüche 5 bis 8, **dadurch gekennzeichnet, dass** die zweite Messbasis (11) über erste pneumatische Antriebe (10) mit dem Fahrwerksrahmen (6) verbunden ist.

10. Gleismessfahrzeug (1)nach einem der Ansprüche 1 bis 9, **dadurch gekennzeichnet, dass** das Gleismessfahrzeug (1) eine Auswerteeinrichtung (23) umfasst, welche zur Auswertung der Messergebnisse der Intertialmesseinheit (8), der Lagemesseinrichtungen (9) und der Kompensationsmesseinrichtungen (20,22) eingerichtet ist.

11. Gleismessfahrzeug (1) nach einem der Ansprüche 1 bis 10, **dadurch gekennzeichnet, dass** das Gleismessfahrzeug (1) eine GNNS-Antenne (24) zum Empfang von Signalen eines globalen Navigationssatellitensystems umfasst.

12. Gleismessfahrzeug (1) nach einem der Ansprüche 1 bis 11, **dadurch gekennzeichnet, dass** die zweite Messbasis (11) in einer angehobenen Stellung durch eine Sicherheitseinrichtung (25) arretierbar ist.

13. Gleismessfahrzeug (1) nach Anspruch 12, **dadurch gekennzeichnet, dass** die Sicherheitseinrichtung (25) als Sicherungshaken ausgeführt ist.

14. Verfahren zum Betreiben eines Gleismessfahrzeugs (1) nach einem der Ansprüche 1 bis 13, **dadurch gekennzeichnet, dass** während einer Fahrt des Gleismessfahrzeugs (1) mittels der Inertialmesseinheit (8) eine Raumkurve erfasst wird, dass in einem ersten Betriebsmodus die Raumkurve mittels Messdaten der Lagemesseinrichtungen (9) in eine dem Gleisverlauf entsprechende Raumkurve transformiert wird und dass in einem zweiten Betriebsmodus bei abgesenkter zweiter Messbasis (11) die Raumkurve mittels Messdaten der Kompensationsmesseinrichtungen in eine dem Gleisverlauf entsprechende Raumkurve transformiert wird.

15. Verfahren nach Anspruch 14, **dadurch gekennzeichnet, dass** zwischen erstem und zweiten Betriebsmodus in Abhängigkeit eines Messsignals automatisch umgeschaltet wird.

## Claims

1. A track measuring vehicle (1) for recording a track geometry of a track (2), including a vehicle frame (5) which has rail undercarriages (4) and is mobile on two rails (3) of the track (2), and including a first measuring base (7) on which are arranged an inertial measuring unit (8) and, for a position determination relative to each rail (3), at least one contact-less position measuring device (9), **characterized in that** a lowerable second measuring base (11) is arranged which comprises measuring running wheels (12) designed to be set upon the rails (3) and which is connected to the first measuring base (7) via compensation measuring devices (20, 22).

2. A track measuring vehicle (1) according to claim 1, **characterized in that,** for the position determination relative to the respective rail (3), two position measuring devices (9) spaced from one another are arranged on the first measuring base (7).

3. A track measuring vehicle (1) according to claim 1 or 2, **characterized in that** the position measuring devices (9) are designed as laser line scanners.

4. A track measuring vehicle (1) according to one of claims 1 to 3, **characterized in that** the compensation measuring devices (20, 22) are designed as path- and/or angle measuring devices.

5. A track measuring vehicle (1) according to one of claims 1 to 4, **characterized in that** the first measuring base (7) is configured as a chassis frame (6) of a rail undercarriage (4).

6. A track measuring vehicle (1) according to claim 5, **characterized in that** the second measuring base (11) comprises a first telescopic axle (17) with two measuring running wheels (12) which is mounted on the chassis frame (6) in a lowerable manner.

7. A track measuring vehicle (1) according to claim 6, **characterized in that** the second measuring base (11) comprises a second telescopic axle (18) with two measuring running wheels (12) which is mounted for rotation about a longitudinal axis (19) of the track vehicle relative to the first telescopic axle (17).

8. A track measuring vehicle (1) according to claim 6 or 7, **characterized in that** a second pneumatic drive (21) for pressing the measuring running wheels (12) laterally to the rails (3) is associated with the respective telescopic axle (17, 18).

9. A track measuring vehicle (1) according to one of claims 5 to 8, **characterized in that** the second measuring base (11) is connected to the chassis frame (6) via first pneumatic drives (10).

10. A track measuring vehicle (1) according to one of claims 1 to 9, **characterized in that** the track measuring vehicle (1) comprises an evaluation device (23) which is designed for evaluating the measurement results of the inertial measuring unit (8), the position measuring devices (9) and the compensation measuring devices (20,22).

11. A track measuring vehicle (1) according to one of claims 1 to 10, **characterized in that** the track measuring vehicle (1) comprises a GNNS antenna (24) for receiving signals of a global navigation satellite system.

12. A track measuring vehicle (1) according to one of claims 1 to 11, **characterized in that** the second measuring base can (11) be locked in a raised position by means of a safety device (25).

13. A track measuring vehicle (1) according to claim 12, **characterized in that** the safety device (25) is designed as a securing hook.

14. A method of operating a track measuring vehicle (1) according to one of claims 1 to 13, **characterized in that,** during a run of the track measuring vehicle (1), a spatial curve is recorded by means of the inertial measuring unit (8), that in a first operating mode the spatial curve is transformed by means of measurement data of the position measuring devices (9) into a spatial curve corresponding to the track course, and that in a second operating mode with lowered second measuring base (11) the spatial curve is transformed by means of measurement data of the compensation measuring devices into a spatial curve corresponding to the track course.

15. A method according to claim 14, **characterized in that** there is an automatic switching between the between the first and second operating mode in dependence on a measuring signal.

## Revendications

1. Véhicule de mesure de voie (1) pour la détection d'une géométrie de voie d'une voie ferrée (2), avec un châssis de véhicule (5) pouvant être déplacé sur deux rails (3) de la voie ferrée (2) et présentant des mécanismes de roulement ferroviaires (4), et avec une première base de mesure (7) sur laquelle un module de mesure d'inertie (8) et au moins un dispositif de mesure d'assiette sans contact (9) pour une détermination de position par rapport à chaque rail (3) sont disposés, **caractérisé en ce qu'**est disposée une seconde base de mesure (11) pouvant être abaissée qui comprend des roues porteuses de mesure (12) pouvant être posées sur les rails (3) et est connectée à la première base de mesure (7) par le biais de dispositifs de mesure de compensation (20, 22).

2. Véhicule de mesure de voie (1) selon la revendication 1, **caractérisé en ce que** deux dispositifs de mesure d'assiette (9) écartés l'un de l'autre sont disposés sur la première base de mesure (7) pour la détermination de position par rapport au rail respectif (3).

3. Véhicule de mesure de voie (1) selon la revendication 1 ou 2, **caractérisé en ce que** les dispositifs de mesure d'assiette (9) sont réalisés en tant que scanner linéaire laser.

4. Véhicule de mesure de voie (1) selon une des revendications 1 à 3, **caractérisé en ce que** les dispositifs de mesure de compensation (20, 22) sont réalisés en tant que dispositifs de mesure de déplacement et/ou d'angle.

5. Véhicule de mesure de voie (1) selon une des revendications 1 à 4, **caractérisé en ce que** la première base de mesure (7) est réalisée en tant que châssis de mécanisme de roulement (6) d'un mécanisme de roulement ferroviaire (4).

6. Véhicule de mesure de voie (1) selon la revendication 5, **caractérisé en ce que** la seconde base de mesure (11) comprend un premier essieu télescopique (17) avec deux roues porteuses de mesure (12) qui est logé de manière à pouvoir être abaissé sur le châssis de mécanisme de roulement (6).

7. Véhicule de mesure de voie (1) selon la revendication 6, **caractérisé en ce que** la seconde base de mesure (11) comprend un second essieu télescopique (18) avec deux roues porteuses de mesure (12) qui est logé de manière rotative par rapport au premier essieu télescopique (17) autour d'un axe longitudinal de véhicule ferroviaire (19).

8. Véhicule de mesure de voie (1) selon la revendication 6 ou 7, **caractérisé en ce qu'**un second entraînement pneumatique (21) pour la pression latérale des roues porteuses de mesure (12) sur les rails (3) est associé à l'essieu télescopique respectif (17, 18).

9. Véhicule de mesure de voie (1) selon une des revendications 5 à 8, **caractérisé en ce que** la seconde base de mesure (11) est connectée au châssis de véhicule (6) par le biais de premiers entraînements pneumatiques (10).

10. Véhicule de mesure de voie (1) selon une des revendications 1 à 9, **caractérisé en ce que** le véhicule de mesure de voie (1) comprend un dispositif d'évaluation (23) qui est configuré pour l'évaluation des résultats de mesure du module de mesure d'inertie (8), des dispositifs de mesure d'assiette (9) et des dispositifs de mesure de compensation (20, 22).

11. Véhicule de mesure de voie (1) selon une des revendications 1 à 10, **caractérisé en ce que** le véhicule de mesure de voie (1) comprend une antenne GNSS (24) pour la réception de signaux d'une géolocalisation et navigation par un système de satellites.

12. Véhicule de mesure de voie (1) selon une des revendications 1 à 11, **caractérisé en ce que** la seconde base de mesure (11) peut être bloquée dans une position soulevée par un dispositif de sécurité (25).

13. Véhicule de mesure de voie (1) selon la revendication 12, **caractérisé en ce que** le dispositif de sécurité (25) est réalisé en tant que crochet de sûreté.

14. Procédé d'exploitation d'un véhicule de mesure de voie (1) selon une des revendications 1 à 13, **caractérisé en ce que** pendant un trajet du véhicule de mesure de voie (1), une courbe spatiale est détectée au moyen du module de mesure d'inertie (8), que la courbe spatiale est transformée dans un premier mode d'exploitation au moyen de données de mesure des dispositifs de mesure d'assiette (9) en une courbe spatiale correspondant au tracé de la voie et que la courbe spatiale est transformée dans un second mode d'exploitation avec la seconde base de mesure abaissée (11) au moyen de données de mesure des dispositifs de mesure de compensation en une courbe spatiale correspondant au tracé de la voie.

15. Procédé selon la revendication 14, **caractérisé en ce qu'**une commutation automatique est effectuée entre le premier et second mode d'exploitation en fonction d'un signal de mesure.
